# EUROPEAN PATENT SPECIFICATION

(11) **EP 1 966 505 B1**
(45) Date of publication and mention of the grant of the patent: **21.04.2010**
(21) Application number: 05849587.0
(22) Date of filing: 29.12.2005
(51) Int. Cl.: F16D 65/00

(54) **DISK BRAKE WITH DAMPING ELEMENT**
SCHEIBENBREMSE MIT DÄMPFUNGSELEMENT
FREIN A DISQUE AVEC ELEMENT AMORTISSEUR

(43) Date of publication of application: 10.09.2008
(73) Proprietor: Freni Brembo S.p.A., 24035 Curno (Bergamo) (IT)
(72) Inventor: CRIPPA, Cristian, 24031 Almenno San Salvatore (Bergamo) (IT); CASTELLANA, Mirko, 24126 Bergamo (IT); NESSI, Lorenzo, 24128 Bergamo (IT)
(74) Representative: Leihkauf, Steffen Falk
(86) International application number: PCT/IT2005/000776
(87) International publication number: WO 2007/074487

(56) References cited:
- WO-A-01/27489
- DE-U- 1 936 361
- US-A- 3 460 652
- US-A1- 2003 213 658
- US-B1- 6 193 024
- PATENT ABSTRACTS OF JAPAN vol. 006, no. 216 (M-168), 29 October 1982 (1982-10-29) & JP 57 120736 A (AKEBONO BRAKE KOGYO KK), 27 July 1982 (1982-07-27)
- PATENT ABSTRACTS OF JAPAN vol. 004, no. 006 (M-088), 18 January 1980 (1980-01-18) & JP 54 141956 A (AISIN SEIKI CO LTD), 5 November 1979 (1979-11-05)

## Description

The object of the present invention is a disc brake, particularly for vehicles, comprising a brake caliper, a pad consisting of a support plate with a friction material coating and a piston in order to actuate this pad, in which a damping element with at least one damping layer of compliant elastic material interposed between the piston and the brake pad is provided.

It is known that the disc brakes, during a braking, may produce vibrations of various amplitude and frequency, due to relative movements among bodies in pressing contact, particularly in the friction zone between the pad and the braking disc and in those areas where the pad rests against the seat thereof in the brake caliper.

While it is possible to control the vibrations and hence to reduce the braking disc noise by means of adequate disc tuning, for example by shifting the eigen-frequencies of the disc away from the frequency of the vibrations induced because of the friction effect, this is not easily possible with the brake pad vibrations. In fact, the supporting constraints and the reduced sizes of the pad do not allow a suitable tuning of the same.

The vibrations of the brake pads, particularly relative to the piston and the support seats against which they are abutted in pressing contact, are particularly enhanced during soft and medium-intensity braking when the piston clamping force is not sufficient to provide a stiff clamping of the brake pad.

The only countermeasure available in the prior art is to arrange a damping element either between the piston and the brake pad or between two portions of the piston such that a brake pad movement entails deforming the damping element and hence dissipating the (vibration) kinetic energy of the brake pad.

While this damping configuration contributes within certain limits to a damping of the brake pad vibrations when the braking is over, it has not proved to be very effective during the braking. This is probably due to the fact that the braking power inducing the brake pad vibrations during braking is much higher than the damping capacity of the prior art damping installations.

Since soft and medium-intensity braking is somewhat frequent and sometimes very long, for example during the trips at medium and low speed in the mountains, the brake pad vibrations in the form of whistles are heard as particularly irksome.
US 6,193,024 and US 2003/0213658 disclose disk brakes with features of the preamble of claim 1.

Therefore, the object of the present invention is to provide a silent disc brake, particularly during low- and medium-intensity braking.

This and other objects are achieved by means of a disc brake as defined in claim 1.

Due to the particular profile of the piston active surface, the pad and the damping element are fastened to the piston during the braking when the pad is in defined pressing abutment against the seat thereof which is provided in the caliper. This allows counteracting those (vibration) movements transversal to the clamping direction by means of the stiff transversal support provided by the piston in cooperation with the reaction braking force (tangent force) of the seats for the brake pad. A further synergy effect derives from the fact that the (vibration) movements of the pad during braking entail higher damping element deformations and hence a higher power dissipation, due to the transversal movement constraint between the piston and the damping element and the connection of the damping element to the pad.

In order to better understand the invention and appreciate the advantages thereof, some embodiments will be described herein below, by way of illustrative and non-limiting example, with reference to the annexed figures, in which:

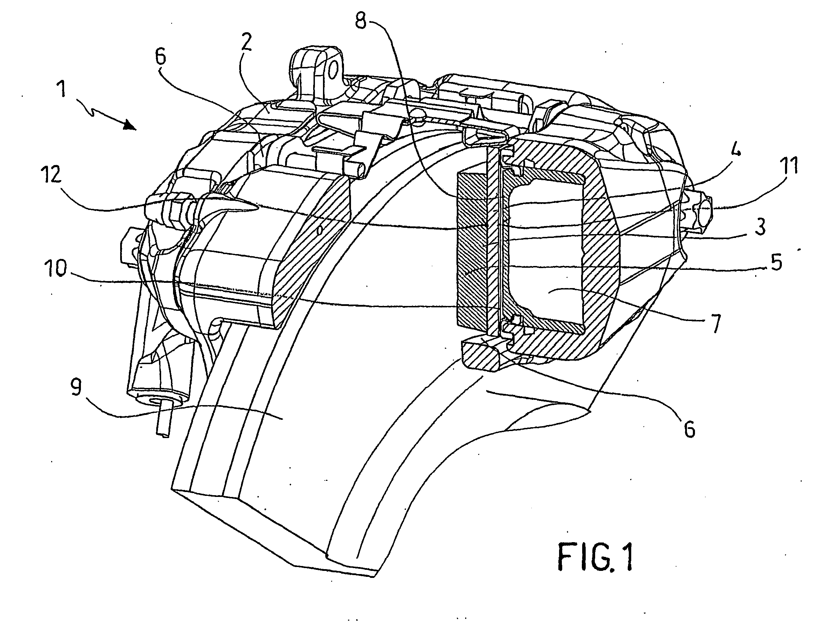

Fig. 1 is a partially sectioned, perspective view of a disc brake according to an embodiment of the invention;

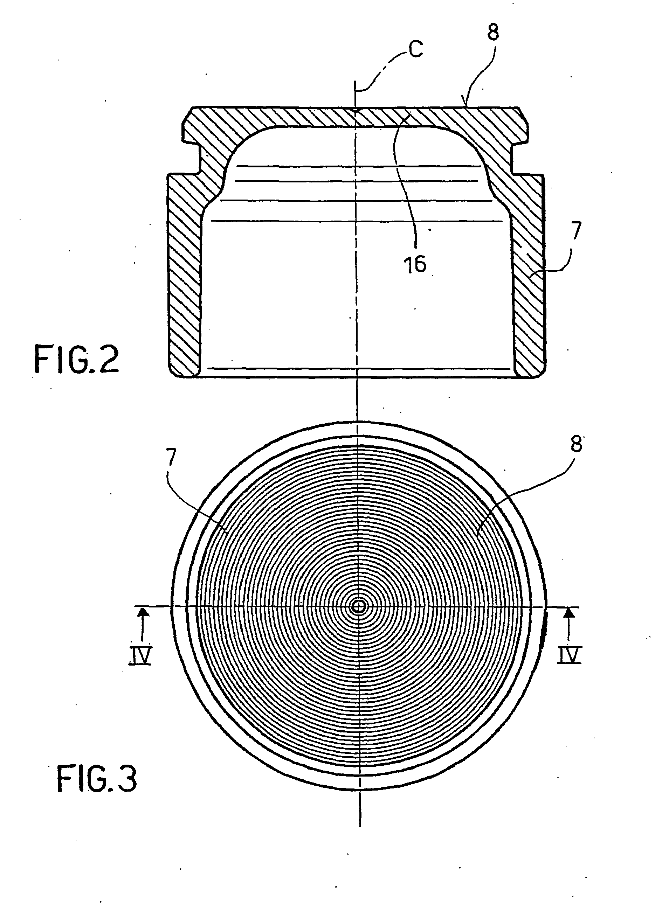

Fig. 2 is a longitudinal sectional view of a piston according to a first embodiment of the invention;

Fig. 3 is a front view of the piston from Fig. 2;

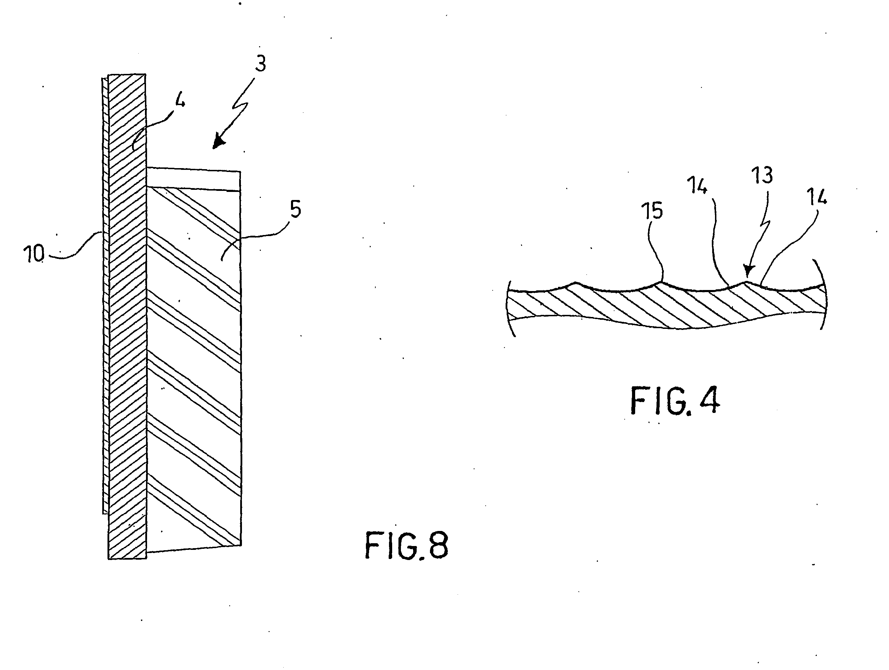

Fig. 4 is an enlarged sectional view taken along line IV-IV from Fig. 3;

Fig. 5 is a longitudinal sectional view of a piston according to a second embodiment of the invention;

Fig. 6 is a front view of the piston from Fig. 5;

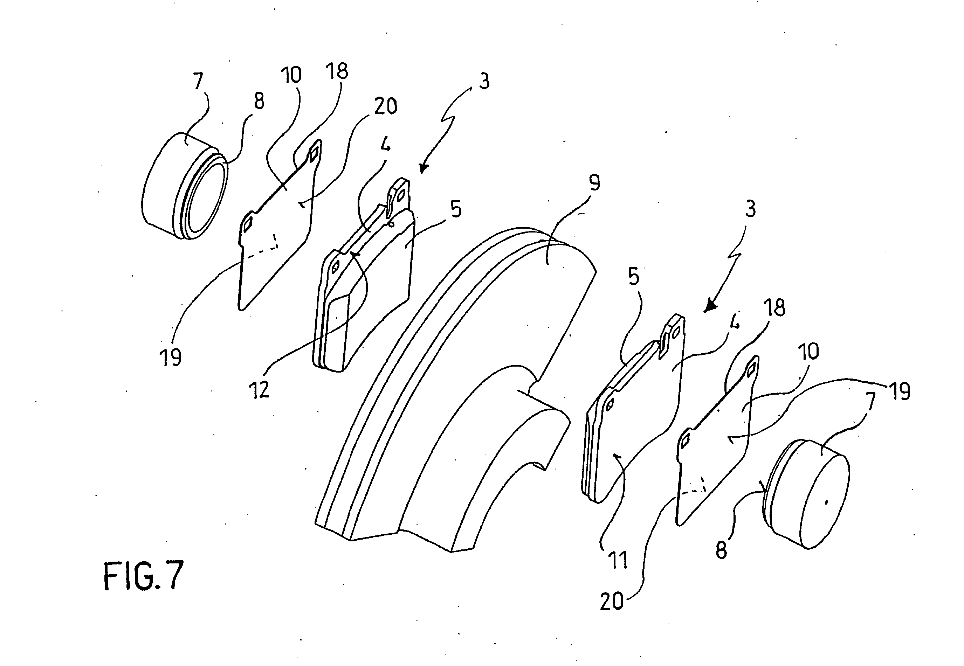

Fig. 7 is an exploded view of some components of the disc brake according to an embodiment of the invention;

Fig. 8 is a sectional view of a pad with a damping element of a disc brake according to an embodiment of the invention.

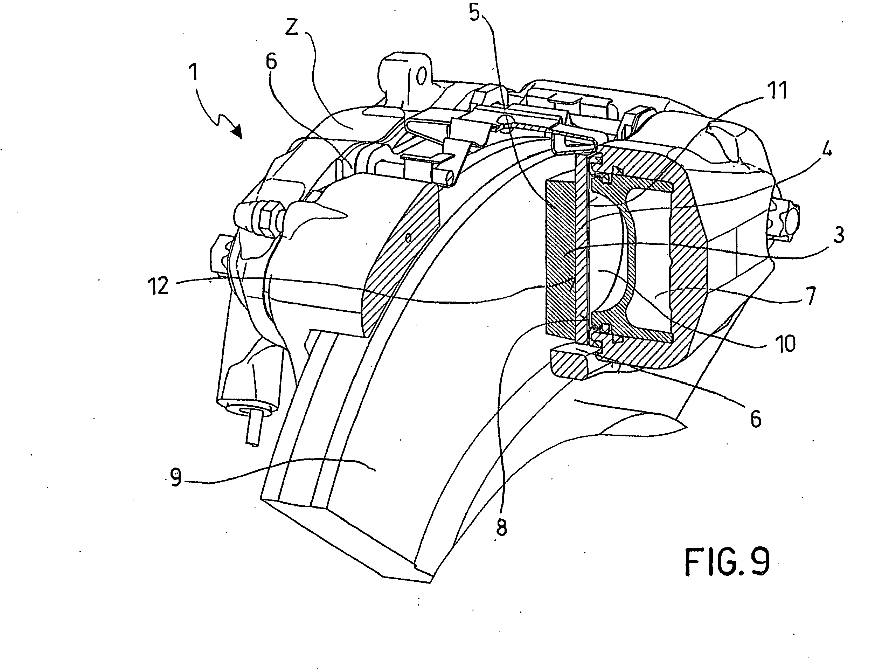

Fig. 9 is a partially sectioned, perspective view of a disc brake according to a further embodiment of the invention;

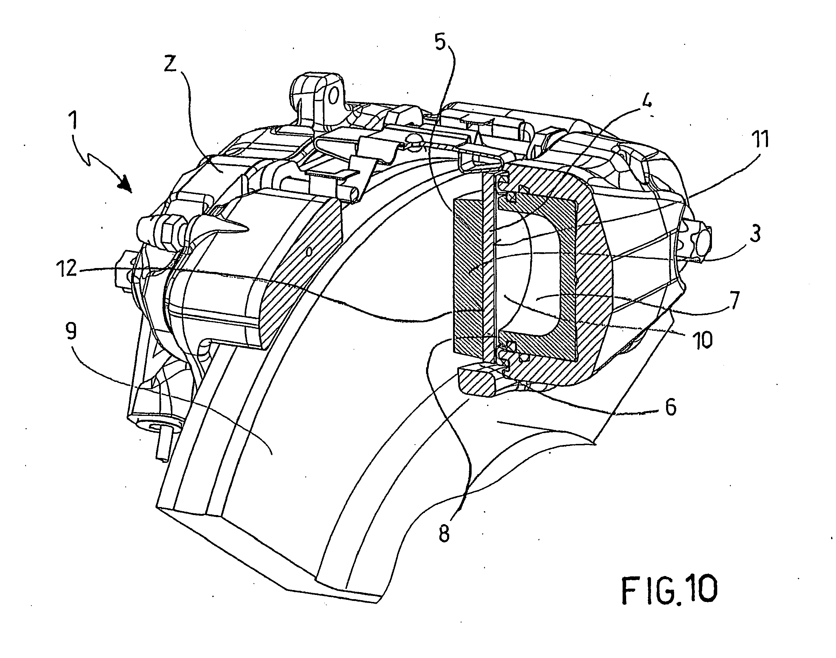

Fig. 10 is a partially sectioned, perspective view of a disc brake according to a still further embodiment of the invention.

With reference to the figures, a disc brake has been generally indicated with numeral 1. The brake 1 comprises a caliper 2 with at least one, preferably two brake pads 3 comprising a support plate 4 and a friction material coating 5. The brake pads are accommodated in suitable brake pad seats 6 suitable to hinder the tangent braking power. At least one piston 7 comprising an active surface 8 intended to act on the pad in order to clamp the latter on a braking disc 9 is associated to each pad 3. The piston is, in turn, part of an actuating device, for example either a hydraulic cylinder-piston unit or an electromechanical linear actuator integrated into the caliper body 2. A damping element 10 is connected to the brake pad 3 and, precisely, the damping element 10 is arranged on the rear surface 11 of the support plate 4 opposite the front surface 12 carrying the friction material coating 5 such as to be positioned between the support plate 4 and the active surface 8 of the piston 7.

The active surface 8 either comprises or forms one or more projections 13 suitable to penetrate into the material of the damping element 10, during braking. This advantageously allows providing a movement constraint of the brake pad and the damping element in the directions which are transversal to the clamping direction of the braking disc.

In accordance with an embodiment, the projection is either sharp pointed or sharp edged, such as to provide a sharp-edge ridge 15, such as to facilitate the defined inter-penetration and an insertion of the active surface projections into the impressions provided by the latter in the damping element 10, this insertion being defined and reproducible during braking following the first braking.

In accordance with a particularly advantageous embodiment, the projection 13 has in cross-section a cusp shape defined by two arched flanks 14 intersecting each other in said ridge 15 or projection tip, preferably defining an intersection angle α ranging between 0° and 150°, more preferably between 30° and 120° and even more advantageously between 90° and 120°. The arched shape of the flanks 14 facilitates the inter-penetration between the piston active surface 8 and damping element 10 and increases the effectiveness of the interlock thereof, while overcoming any undesired gradual widening of the impressions formed in the damping element.

Advantageously, the flanks 14 are concave such as to obtain a well-defined cutting effect and to form, in the damping element, some impressions defining projections with a sectional surface which is greater than the one of the projections 13. The damping element being typically manufactured in a material which is less resistant than the piston material, said shape of the projections 13 contributes to increase the transversal strain resistance of the projections formed between the impressions in the damping element. Alternatively, the flanks 14 may be convex.

In accordance with the preferred embodiment, the projection 13 comprises a spiral-shaped elevations, preferably substantially concentric with a central axis C of the piston 7.

According to an embodiment, the piston 7 is a substantially cylindrical cup-shaped hydraulic piston, in which a bottom wall 16 of the piston faces the brake pad 3. The bottom wall 16 of the piston 7 may be substantially flat such as to give the active surface 8 a globally flat (of course, except for the projections 13), preferably circular shape, alternatively, the bottom wall 16' is curved such as to form, for example, a spherical calotte with an annular edge which gives the active surface 8 a substantially flat annular shape (except for the projections 13).

In accordance with a further embodiment, the piston defines cooling apertures or cavities 21, at least partially provided in the active surface 8, which have such a depth as not to be completely filled with the material of the damping element 10. Advantageously, these apertures or cavities 21 have a depth which is greater than the thickness of either the damping element or a deformable layer 19 of the damping element in the clamping direction of the brake disc 9.

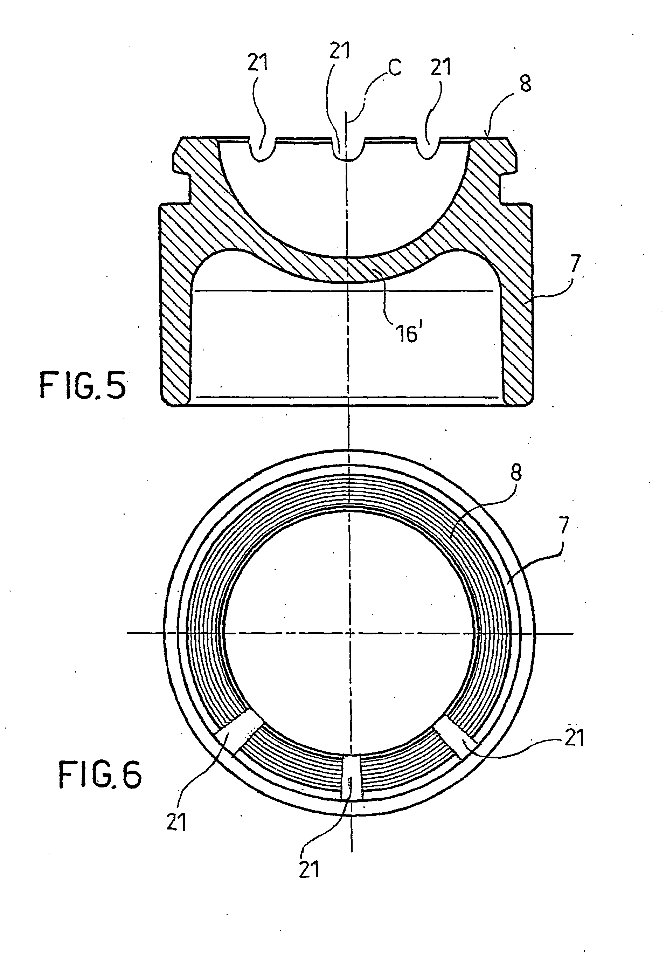

The figure 6 schematically shows both an embodiment (lower half-view) with said cooling apertures and an embodiment (upper half-view) without these apertures.

In accordance with an embodiment, the damping element 10 comprises a plate 18, for example a.metal one, preferably steel, coated with at least one compliant material, for example polymeric, layer 19, preferably rubber, facing the active surface 8 of the piston 7.

Advantageously, the damping element 10 comprises said plate 18 which provides the damping element with stiffness and stability, as well as at least one compliant material layer 19 interposed between the plate 18 and the active surface 8 of the piston and at least one further compliant material layer 20 placed on the surface of the plate 18 facing the pad 3. The various layers 18, 19, 20 of the damping element 10 are preferably connected to one another such as to provide a sandwich-structured single body.

In this case, the active surface 8 of the piston is impressed in the compliant material layer 19 of the damping element 10 during braking, thus particularly preventing that relative vibrations between the piston and the brake pad may arise during soft braking and; accordingly, the brake noise is drastically reduced.

## Claims

1. A disc brake (1) comprising:
- a caliper (2);
- at least one pad (3) comprising a support plate (4) and a friction material coating (5);
- at least one piston (7) for actuating this pad (3), wherein the piston (7) comprises an active surface (8) intended to act on the brake pad (3) in order to clamp the latter on a braking disc (9);
- a damping element (10) connected to the brake pad (3) between the support plate (4) and the piston (7),
wherein the active surface (8) of the piston (7) has one or more projections (13) suitable to penetrate into the damping element (10), during braking **characterized in that** said projection (13) is either sharp pointed or sharp edged.

2. The disc brake (1) according to claim 1, wherein said projection (13) comprises a substantially sharp-edged ridge (15).

3. The disc brake (1) according to any preceding claim, wherein said projection (13) has in cross-section a cusp shape defined by two arched flanks (14) intersecting each other in said ridge (15) or projection tip (13).

4. The disc brake (1) according to claim 3, wherein said flanks (14) are concave.

5. The disc brake (1) according to any preceding claims, wherein said projection (13) comprises a spiral-shaped elevation.

6. The disc brake (1) according to the preceding claim, wherein said spiral-shaped elevation is substantially concentric with a central axis (C) of the piston (7).

7. The disc brake (1) according to any preceding claim, wherein said active surface (8) is substantially annular.

8. The disc brake (1) according to any preceding claim, wherein said active surface (8) is substantially circular.

9. The disc brake (1) according to any preceding claim; wherein the piston (7) defines cooling apertures or cavities (21), being at least partially provided in the active surface (8), which have such a depth as not to be completely filled with the material (19) of the damping element (10).

10. The disc brake (1) according to the preceding claim, wherein said apertures or cavities (21) have a greater depth than the thickness of a deformable layer (19) of the damping element (10) in the clamping direction of the brake disc (9).

11. The disc brake (1) according to any preceding claim, wherein the damping element (10) comprises a metal plate (18) coated with at least one compliant material layer (19) facing the active surface (8) of the piston (7).

12. The disc brake (1) according to any preceding claim, wherein the damping element (10) comprises:
- a plate (18) which provides the damping element with stiffness and stability;
- at least one layer (19) of compliant material interposed between the plate (18) and the active surface (8) of the piston (7);
- at least one further layer (20) of compliant material located between the plate (18) and the brake pad (3)

13. The disc brake (1) according to claim 11 or 12, wherein the layers (18, 19, 20) of the damping element (10) are connected to one another such as to provide a sandwich-structure single body.

## Patentansprüche

1. Eine Scheibenbremse (1) aufweisend:
- einen Sattel (2)
- zumindest einen Klotz (3) aufweisend eine Lagerplatte (4) und eine Reibmaterialbeschichtung (5);
- zumindest einen Kolben (7) zum Betätigen dieses Klotzes (3), wobei der Kolben (7) eine aktive Oberfläche (8) aufweist, die vorgesehen ist, auf den Bremsklotz (3) einzuwirken, um den letzteren auf eine Bremsscheibe (9) aufzuspannen;
- ein Dämpfungselement (10), das mit dem Bremsklotz (3) verbunden ist, zwischen der Lagerplatte (4) und dem Kolben (7),
wobei die aktive Oberfläche (8) des Kolbens (7) einen oder mehrere Vorsprünge (13) hat, die geeignet sind, in das Dämpfungselement (10) während eines Bremsens einzudringen,
**gekennzeichnet dadurch, dass**
der Vorsprung (13) entweder scharf zugespitzt oder scharfkantig ist.

2. Die Scheibenbremse (1) gemäß Anspruch 1, wobei der Vorsprung (13) einen im Wesentlichen scharfkantigen Grat (15) aufweist.

3. Die Scheibenbremse (1) gemäß jeglichem vorstehenden Anspruch, wobei der Vorsprung (13) im Querschnitt eine Scheitelform hat, die durch zwei gebogene Flanken (14) definiert wird, die sich einander in dem Grat (15) oder der Vorsprungsspitze (13) kreuzen.

4. Die Scheibenbremse (1) gemäß Anspruch 3, wobei die Flanken (14) konkav sind.

5. Die Scheibenbremse (1) gemäß jeglichem vorstehenden Anspruch, wobei der Vorsprung (13) eine spiralförmige Erhebung aufweist.

6. Die Scheibenbremse (1) gemäß dem vorstehenden Anspruch, wobei die spiralförmige Erhebung im Wesentlichen konzentrisch mit einer zentralen Achse (C) des Kolbens (7) ist.

7. Die Scheibenbremse (1) gemäß jeglichem vorstehenden Anspruch, wobei die aktive Oberfläche (8) im Wesentlichen ringförmig ist.

8. Die Scheibenbremse (1) gemäß jeglichem vorstehenden Anspruch, wobei die aktive Oberfläche (8) im Wesentlichen kreisförmig ist.

9. Die Scheibenbremse (1) gemäß jeglichem vorstehenden Anspruch, wobei der Kolben (7) Kühlöffnungen oder Kühlmulden (21) definiert, die zumindest teilweise in der aktiven Oberfläche (8) bereitgestellt werden und die eine solche Tiefe haben, dass sie nicht komplett mit dem Material (19) des Dämpfungselements (10) gefüllt werden.

10. Die Scheibenbremse (1) gemäß dem vorstehenden Anspruch, wobei die Öffnungen oder Mulden (21) eine größere Tiefe haben als die Dicke einer verformbaren Schicht (19) des Dämpfungselements (10) in der Spannrichtung der Bremsscheibe (9).

11. Die Scheibenbremse (1) gemäß jeglichem vorstehenden Anspruch, wobei das Dämpfungselement (10) eine Metallplatte (18) aufweist, die mit zumindest einer nachgiebigen Materialschicht (19) beschichtet ist, die zu der aktiven Oberfläche (8) von dem Kolben (7) zeigt.

12. Die Scheibenbremse (1) gemäß jeglichem vorstehenden Anspruch, wobei das Dämpfungselement (10) aufweist:
- eine Platte (18), die dem Dämpfungselement Steifigkeit und Stabilität bereitstellt;
- zumindest eine Schicht (19) eines nachgiebigen Materials angeordnet zwischen der Platte (18) und der aktiven Oberfläche (8) des Kolbens (7);
- zumindest eine weitere Schicht (20) eines nachgiebigen Materials, die zwischen der Platte (18) und dem Bremsklotz (3) gelegen ist.

13. Die Scheibenbremse (1) gemäß Anspruch 11 oder 12, wobei die Schichten (18, 19, 20) des Dämpfungselements (10) miteinander verbunden sind, so dass ein einzelner Körper in Verbundbauweise bereitgestellt wird.

## Revendications

1. Frein à disque (1) comprenant :
- un étrier (2) ;
- au moins un patin (3) comprenant une plaque de support (4) et un revêtement (5) en matériau de friction ;
- au moins un piston (7) pour actionner ce patin (3), dans lequel le piston (7) comprend une surface active (8) destinée à agir sur le patin de frein (3) afin de serrer celui-ci sur un disque de frein (9) ;
- un élément d'amortissement (10) relié au patin de frein (3) entre la plaque de support (4) et le piston (7),
dans lequel la surface active (8) du piston (7) comprend une ou plusieurs projections (13) appropriées pour pénétrer dans l'élément d'amortissement (10) pendant le freinage,
**caractérisé en ce que** ladite projection (13) présente une pointe acérée ou un bord acéré.

2. Frein à disque (1) selon la revendication 1, dans lequel ladite projection (13) comprend une nervure (15) avec un bord sensiblement acéré.

3. Frein à disque (1) selon l'une quelconque des revendications précédentes, dans lequel ladite projection (13) présente en coupe transversale une forme en coupelle définie par deux flancs arqués (14) qui se recoupent l'un l'autre dans ladite nervure (15) ou dans ledit embout en projection (13).

4. Frein à disque (1) selon la revendication 3, dans lequel lesdits flancs (14) sont concaves.

5. Frein à disque (1) selon l'une quelconque des revendications précédentes, dans lequel ladite projection (13) comprend une élévation en forme de spirale.

6. Frein à disque (1) selon la revendication précédente, dans lequel ladite élévation en forme de spirale est sensiblement concentrique à un axe central (C) du piston (7).

7. Frein à disque (1) selon l'une quelconque des revendications précédentes, dans lequel ladite surface active (8) est sensiblement annulaire.

8. Frein à disque (1) selon l'une quelconque des revendications précédentes, dans lequel ladite surface active (8) est sensiblement circulaire.

9. Frein à disque (1) selon l'une quelconque des revendications précédentes, dans lequel le piston (7) définit des ouvertures ou des cavités (21) de refroidissement, prévues au moins partiellement dans la surface active (8), qui ont une profondeur telle qu'elles ne sont pas complètement remplies avec le matériau (19) de l'élément d'amortissement (10).

10. Frein à disque (1) selon la revendication précédente, dans lequel lesdites ouvertures ou cavités (21) ont une profondeur plus élevée que l'épaisseur d'une couche déformable (19) de l'élément d'amortissement (10) dans la direction de serrage du frein à disque (9).

11. Frein à disque (1) selon l'une quelconque des revendications précédentes, dans lequel l'élément d'amortissement (10) comprend une plaque de métal (18) revêtue avec une couche d'au moins un matériau souple (19) qui fait face vers la surface active (8) du piston (7).

12. Frein à disque (1) selon l'une quelconque des revendications précédentes, dans lequel l'élément d'amortissement (10) comprend :
- une plaque (18) qui confère raideur et stabilité à l'élément d'amortissement ;
- au moins une couche (19) de matériau souple interposée entre la plaque (18) et la surface active (8) du piston (7) ;
- au moins une autre couche (20) en matériau souple placée entre la plaque (18) et le patin de frein (3).

13. Frein à disque (1) selon la revendication 11 ou 12, dans lequel les couches (18, 19, 20) de l'élément d'amortissement (10) sont reliées les unes aux autres de manière à réaliser un corps unique à structure en sandwich.
